# EUROPÄISCHE PATENTSCHRIFT

(11) **EP 4 330 562 B1**
(45) Veröffentlichungstag und Bekanntmachung des Hinweises auf die Patenterteilung: **11.06.2025**
(21) Anmeldenummer: 22718064.3
(22) Anmeldetag: 06.04.2022
(51) Int. Cl.: F16F 9/04

(54) **FALTENBALGLUFTFEDER**
BELLOWS-TYPE AIR SPRING
RESSORT PNEUMATIQUE À SOUFFLET

(30) Priorität: 27.04.2021 DE 102021204152
(43) Veröffentlichungstag der Anmeldung: 06.03.2024
(73) Patentinhaber: ContiTech Deutschland GmbH, 30175 Hannover (DE)
(72) Erfinder: HUBER, Paul, 30165 Hannover (DE); STÖTER, Bernd, 30165 Hannover (DE)
(74) Vertreter: Preusser, Andrea
(86) Internationale Anmeldenummer: PCT/DE2022/200067
(87) Internationale Veröffentlichungsnummer: WO 2022/228625

(56) Entgegenhaltungen:
- WO-A1-86/04660
- DE-C- 475 626

## Beschreibung

Die Erfindung betrifft eine Faltenbalgluftfeder mit mindestens einem Gürtelring, wobei die Faltenbalgluftfeder um eine Drehachse verkippbar ist.

Faltenbalgluftfedern mit zwei oder mehr Falten besitzen zwischen den Falten eine taillenförmige Einschnürung. Diese Einschnürung wird durch einen Verstärkungsring gebildet, welcher dafür sorgt, dass sich bei Druckbeaufschlagung der elastische Gummibalg nicht ballonartig aufbläht. Der Verstärkungsring wird nachfolgend Gürtelring genannt.

Ein - auf die Mittel-Querschnittsebene bezogen - symmetrischer Aufbau der Falten sorgt bei Betrieb mit Innendruck für symmetrische Kräfteverhältnisse in der flexiblen Balgwand, so dass sich bei axialer Verformung die zwei oder mehr Falten "automatisch" proportional über die Balglänge aufteilen, vorausgesetzt, die gegenüberliegenden Anschlussteile sind symmetrisch zueinander angeordnet. Der Bereich der möglichen axialen Verformung wird beim Zusammenfahren durch die Blockhöhe begrenzt, d.h. die Höhe, die sich durch die Summe der Dicken der zusammengedrückten Balgwände und der Gürtelringe sowie die Höhen der Anschlussteile ergibt, sowie beim Ausfahren durch die maximale Streckung des textilen Festigkeitsträgers.

Faltenbalgluftfedern sind prädestiniert für Anwendungen, bei denen sich bei Betätigung die Befestigungsflächen auf einer gekrümmten Bahn bewegen, so dass die gegenüberliegenden Befestigungsflächen in veränderlichen Winkeln zueinander geneigt sind. Dies sind beispielsweise Anwendungen, bei denen die beiden Anschlussflächen über eine Drehachse miteinander verbunden sind. Je größer die Falte ist, desto größer kann die Verwinklung sein. Eine Faltenbalgluftfeder mit mehreren hintereinandergeschalteten Falten ("Zwei-" oder "Dreifaltenbalg") kann wiederum ein Vielfaches der Verwinklung eines Einfaltenbalges ausführen. Im Weiteren werden jedoch nur Faltenbalgluftfedern mit mindestens zwei Falten und mindestens einem Gürtelring betrachtet.

Derartige Luftfedern sind beispielsweise in der DE 126 48 78 B oder der DE 69 61 34 22 T2 offenbart.

Die DE 126 48 78 B offenbart eine Faltenbalgluftfeder, bei welcher die metallischen Gürtelringe als separate Bauteile ausgeführt sind, die DE 69 61 34 22 T2 beschreibt eine Ausführungsform, bei welcher die metallische Verstärkung aus mehreren gewickelten Drähten besteht, welche direkt im Elastomer des Faltenbalges eingebettet sind. Der Gürtelring stellt also kein separates Bauteil dar.

Bei einer nicht parallelen Verschiebung der Anschlussteile der Faltenbalgluftfeder im Betrieb, also bei einer Verwinkelung oder Verkippung, kann es zu einem Ausknicken der Faltenbalgluftfeder kommen.

Das Ausknicken ist eine Fehlfunktion, welche zu einem nicht-spezifikations¬gerechten Betrieb führen kann, beispielsweise, indem der spezifizierte Bauraum überschritten wird, oder indem durch den Seitenversatz des Gürtelringes die Kraftwirkrichtung sich verlagert, so dass die Kräfte außerhalb der Spezifikation sind. Ein Seitenversatz eines Gürtelringes beim Zusammenfahren kann auch das Blockmaß vergrößern.

In den hier aufgeführten Fällen tritt in der Regel erhöhter Verschleiß oder gar der komplette Ausfall der Faltenbalgluftfeder auf.

Es gibt daher Lösungsansätze, um das Ausknicken der Faltenbalgluftfeder zu verhindern. Beispielsweise ist in der DE 457 626 A eine einfache Lösung offenbart, bei der einer der Gürtelringe mittels gelenkigen Anlenkplättchen, die am Rahmen eines Fahrzeugs angelenkt sind, die Faltenbalgluftfeder am Ausknicken hindern soll. Eine derartige Lösung kann jedoch nicht befriedigen.

Die Fig. 3a - 3c zeigt die Kinematik einer Faltenbalgluftfeder gemäß dem Stand der Technik aus der DE 475 626 A.

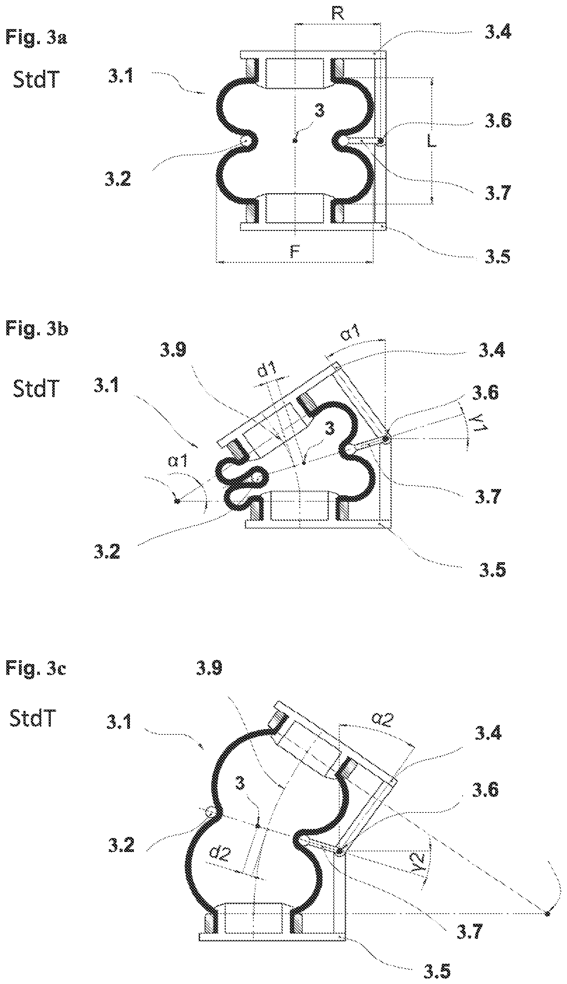

Würde man die dort beschriebene Führung von Gürtelringen durch eine Anlenkung 3.7 an der Drehachse 3.6 der Faltenbalg-Anschlussteile 3.4 und 3.5 bewerkstelligen, würde dies zwar ein Ausknicken unterbinden. Aber wie in Figuren 3b und 3c zu erkennen, könnte der Faltenbalg 3.1 nicht seine natürliche gekrümmte Längsachse 3.9 einnehmen. Der Mittelpunkt 3.3 des Gürtelringes 3.2 wäre um den Betrag d1 bzw. d2 gegenüber der gekrümmten Längsachse 3.9 verschoben. Die Anlenkung des Gürtelringes sorgt immerhin dafür, dass bei symmetrischem Aufbau der Pos. 3.4 und 3.5 für die Winkel gilt: γ1 = ½ x α1 bzw. γ2 = ½ x α2

Im Fall des Auseinanderfahrens auf maximale Streckung, wie in Fig. 3c dargestellt, verringert sich der nutzbare Hub des Faltenbalges durch ein "Herausdrücken" des Gürtelringes um den Betrag d2.

Der Erfindung lag die Aufgabe zugrunde, eine Faltenbalgluftfeder für Kinematik-Anwendungen mit Verkippungen zu schaffen, welche auch unter ungünstigen Konstellationen dennoch spezifikationsgerecht und zuverlässig bei Verkippung der Anschlussteile zu betreiben ist, indem ein Ausknicken zuverlässig verhindert wird.

Diese Aufgabe wird dadurch gelöst, dass der Gürtelring oder bei mehreren Gürtelringen die Gürtelringe jeweils mittels eines Hebels angelenkt ist oder sind, wobei die Anlenk-Drehachse des jeweiligen Hebels von der Drehachse der Faltenbalgluftfeder abweicht und
- bei einer Faltenbalgluftfeder mit zwei Falten und einem Gürtelring definiert ist durch den Schnittpunkt zweier fiktiver Hilfslinien, nämlich einerseits einer ersten Hilfslinie, die in Ausgangsstellung der Faltenbalgluftfeder senkrecht zur Hauptachse der Faltenbalgluftfeder und in axialer Richtung gesehen mittig durch eine angrenzende Balgfalte verläuft,
- bei einer Faltenbalgluftfeder mit drei Falten und zwei Gürtelringen definiert ist durch die Schnittpunkte dreier fiktiver Hilfslinien nämlich einerseits einer zweiten und einer dritten Hilfslinie, die in Ausgangsstellung der Faltenbalgluftfeder jeweils senkrecht zur Hauptachse der Faltenbalgluftfeder und in axialer Richtung gesehen mittig durch die jeweiligen äußeren Balgfalten verlaufen,
- mit einer vierten fiktiven Hilfslinie, die parallel zur Hauptachse der Faltenbalgluftfeder durch die Drehachse der Faltenbalgluftfeder verläuft.

Durch eine derartige Anlenkung beschreibt der angelenkte Gürtelring oder beschreiben die angelenkten Gürtelringe jeweils eine Kreisbahn, sodass ihre Mittelpunkte immer, also auch in verkipptem Zustand und damit einer gekrümmten Hauptachse der Faltenbalgluftfeder, auf der Hauptachse der Faltenbalgluftfeder liegen.

Anhand der Zeichnung wird nachstehend ein Beispiel der Erfindung näher erläutert. Es zeigt
Fig. 1a - 1c eine Faltenbalgluftfeder mit zwei Falten und einem Gürtelring und einer erfindungsgemäßen Anlenkung,
Fig.2a - 2b eine Faltenbalgluftfeder mit drei Falten und zwei Gürtelringen mit erfindungsgemäßen Anlenkungen und
Fig. 3a - 3c eine Faltenbalgluftfeder mit einer Kinematik nach dem Stand der Technik.

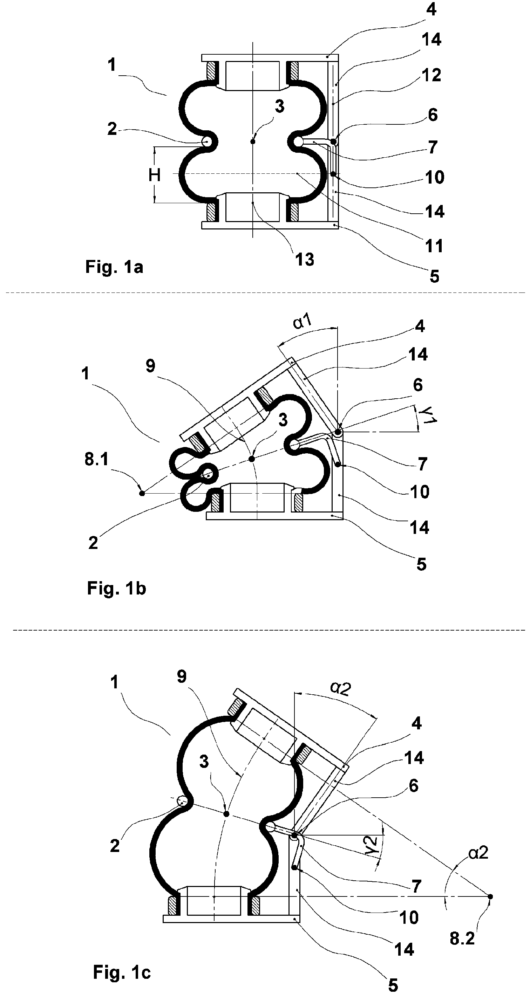

In der Fig. 1a ist eine erfindungsgemäße Faltenbalgluftfeder 1 mit einem Gürtelring 2 in ihrer Ausgangsstellung gezeigt. Der Gürtelring 2 weist einen Mittelpunkt 3 auf, der hier auf der Hauptachse 13 der Faltenbalgluftfeder 1 liegt. Die Faltenbalgluftfeder 1 weist zwei Anschlussteile, nämlich ein Oberteil 4 und ein Unterteil 5 auf, die fest und luftdicht mit der jeweils angrenzenden Falte der Faltenbalgluftfeder 1 verbunden sind. Die Anschlussteile 4 und 5 sind außerdem jeweils mit gegeneinander zu federnden Teilen eines nicht näher gezeigten Aggregates verbunden, welche hier nur prinzipiell durch ein Gestänge 14 symbolisiert sind. Das Aggregat kann beispielsweise eine Karosserie eines Kraftfahrzeugs sein. Jede Falte der Faltenbalgluftfeder 1 weist eine Höhe H auf. Die Faltenbalgluftfeder 1 ist um eine Drehachse 6 verkippbar. Der Gürtelring 2 ist mittels eines Hebels 7 an dem dem Unterteil 5 der Faltenbalgluftfeder 1 zugeordneten Aggregatsteil angelenkt, wobei der Hebel 7 um eine Drehachse 10 drehbar gelagert ist, und die Drehachse 10 definiert wird durch den Schnittpunkt einer Hilfslinie 11, die senkrecht zur Hauptachse 13 mittig durch die dem Unterteil der Faltenbalgluftfeder 1 zugeordneten Falte verläuft und einer Hilfslinie 12, die parallel zur Hauptachse 13 durch die Drehachse 6 der Faltenbalgluftfeder verläuft. Drehachse 6 und Drehachse 10 liegen in dieser Darstellung senkrecht zur Zeichnungsebene.

In der Fig. 1b ist die Faltenbalgluftfeder 1 in eingefedertem, verkippten Zustand gezeigt. Die Faltenbalgluftfeder 1 weist nun eine gekrümmte Hauptachse 9 auf. Oberteil 4 und Unterteil 5 der Faltenbalgluftfeder 1 bilden nun einen Verkippungswinkel α1, der durch die gedachte Verlängerung der Anschlussebenen von Oberteil 4 und Unterteil 5 im Schnittpunkt 8.1 oder auch durch die Verwinkelung des Oberteils 4 gegenüber der Senkrechten gebildet wird. Für den Verkippungswinkel γ1 des Gürtelrings 2 gegenüber der ursprünglichen waagerechten Lage gilt hier γ1 ≠ ½ x α1, was durch die unterschiedliche Lage der Drehachsen 6 und 10 gegeben ist. Die Abweichung der beiden Winkel voneinander ist jedoch gering und wird von der Elastizität der Falten der Faltenbalgluftfeder 1 ausgeglichen.

In der Fig. 1c ist die Faltenbalgluftfeder 1 in ausgefedertem, verkippten Zustand gezeigt. Sie weist nun eine Hauptachse 9 auf, die gegenüber dem eingefederten Zustand entgegengesetzt gekrümmt ist. Auch hier bilden Oberteil 4 und Unterteil 5 einen Verkippungswinkel α2, der hier durch die gedachte Verlängerung der Anschlussebenen von Oberteil 4 und Unterteil 5 im Schnittpunkt 8.2 gebildet wird. Für den Verkippungswinkel γ2 des Gürtelrings 2 gegenüber der ursprünglichen waagerechten Lage gilt auch hier γ2 ≠ ½ x α2, was ebenfalls durch die unterschiedliche Lage der Drehachsen 6 und 10 gegeben ist. Auch hier ist die Abweichung der beiden Winkel voneinander gering und wird ebenfalls von der Elastizität der Falten der Faltenbalgluftfeder 1 ausgeglichen.

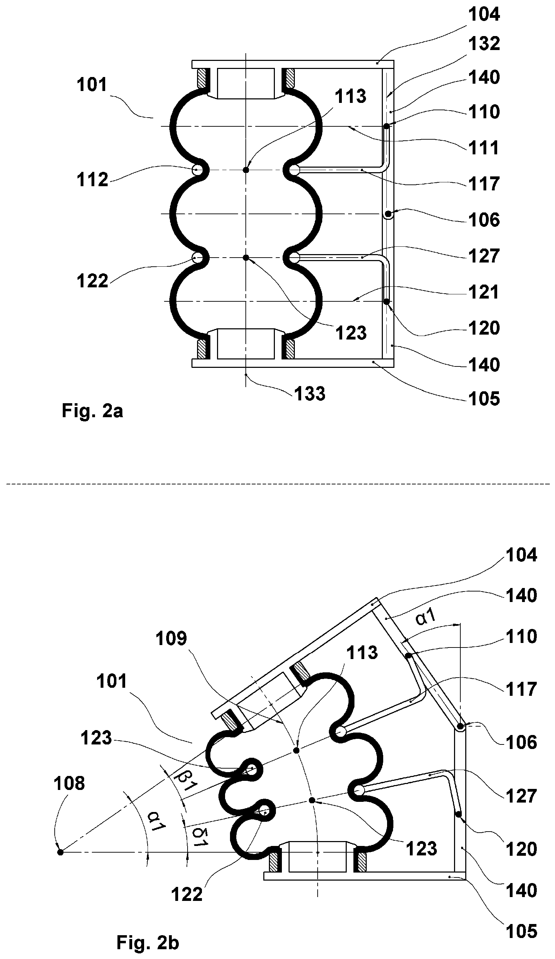

In der Fig. 2a ist eine erfindungsgemäße Faltenbalgluftfeder 101 mit zwei Gürtelringen 112 und 122 in ihrer Ausgangsstellung gezeigt. Die Faltenbalgluftfeder 101 weist ein oberes Anschlussteil 104 und ein unteres Anschlussteil 105 sowie eine Hauptachse 133 auf. Oberteil 104 und Unterteil 105 sind jeweils einem zu federnden, hier nicht näher gezeigten Aggregatsteil zugeordnet, wobei das Aggregat prinzipiell durch ein Gestänge 140 symbolisiert ist. Oberteil 104 und Unterteil 105 sind über eine Drehachse 106 gegeneinander verkippbar. Der Gürtelring 112 ist mit einem Hebel 117 um eine Drehachse 110 an dem dem Oberteil 104 zugeordneten Aggregatsteil angelenkt, der Gürtelring 122 ist durch einen Hebel 127 um eine Drehachse 120 an dem dem Unterteil 105 zugeordneten Aggregatsteil angelenkt. Die Drehachsen 110 und 120 werden jeweils definiert durch den Schnittpunkt zweier fiktiver Hilfslinien, nämlich der Hilfslinie 111, die senkrecht zur Hauptachse und mittig zur dem Oberteil 104 zugeordneten Falte der Faltenbalgluftfeder 101 verläuft mit der Hilfslinie 132, die parallel zur Hauptachse 133 und durch die Drehachse 106 der Faltenbalgluftfeder 101 verläuft sowie der Hilfslinie 121, die senkrecht zur Hauptachse und mittig zur dem Unterteil 105 zugeordneten Falte der Faltenbalgluftfeder 101 verläuft, mit der Hilfslinie 132.

In der Fig. 2b ist die erfindungsgemäße Dreifaltenbalgluftfeder 101 um den Verkippungswinkel α1 verkippt dargestellt. Oberteil 104 und Unterteil 105 der Faltenbalgluftfeder 101 bilden einen Verkippungswinkel α1, der durch die gedachte Verlängerung der Anschlussebenen von Oberteil 104 und Unterteil 105 im Schnittpunkt 108 oder auch durch die Verwinkelung des Oberteils 104 gegenüber der Senkrechten gebildet wird. Der zwischen dem Oberteil 104 und dem Gürtelring 123 gebildete Winkel β1 sowie der zwischen dem Unterteil 105 und dem Gürtelring 133 gebildete Winkel δ1 sind gleich groß, wobei allerdings gilt, dass β1 ≠ ½ α1 Λ δ1 ≠ ⅓ α1. Auch hier wird diese Unregelmäßigkeit von der Elastizität der Falten der Faltenbalgluftfeder 101 ausgeglichen.

### Bezugszeichenliste (gehört zur Beschreibung)

1, 101 Faltenbalgluftfeder
2, 112, 122 Gürtelring
3, 113, 123 Mittelpunkte der Gürtelringe
4, 104 Oberteil der Faltenbalgluftfeder 1, 101
5, 105 Unterteil der Faltenbalgluftfeder 1, 101
6, 106 Drehachse der Faltenbalgluftfeder 1, 101
7, 117, 127 Anlenkhebel
8.1, 8.2, 108 Ebenenschnittpunkte der Anschlussteile
9, 109 gekrümmte Hauptachse
10, 110, 120 Drehachsen der Anlenkhebel
11, 111, 121 fiktive Hilfslinien senkrecht zur Hauptachse
12, 132 fiktive Hilfslinien parallel zur Hauptachse
13, 133 Hauptachse der Faltenbalgluftfeder 1, 101
14, 140 Gestänge, Aggregatsteile

## Patentansprüche

1. Faltenbalgluftfeder (1, 101) mit mindestens einem Gürtelring (2, 112, 122), wobei die Faltenbalgluftfeder (1,101) um eine Drehachse (6, 106) verkippbar ist,
**dadurch gekennzeichnet, dass** der Gürtelring (2, 112, 122) oder bei mehreren Gürtelringen (2, 112, 122) die Gürtelringe (2, 112, 122) jeweils mittels eines Hebels (7, 117, 127) angelenkt ist oder sind, wobei die Anlenk-Drehachse (10,110, 120) des jeweiligen Hebels (7, 117, 127) von der Drehachse (6, 106) der Faltenbalgluftfeder (1, 101) abweicht und
- bei einer Faltenbalgluftfeder (1, 101) mit zwei Falten und einem Gürtelring (2, 112, 122) definiert ist durch den Schnittpunkt zweier fiktiver Hilfslinien (11, 12) nämlich einerseits einer ersten Hilfslinie (11), die in Ausgangsstellung der Faltenbalgluftfeder (1, 101) senkrecht zur Hauptachse (13) der Faltenbalgluftfeder (1, 101) und in axialer Richtung gesehen mittig durch eine angrenzende Balgfalte verläuft,
- bei einer Faltenbalgluftfeder (1, 101) mit drei Falten und zwei Gürtelringen (2, 112, 122) definiert ist durch die Schnittpunkte dreier fiktiver Hilfslinien (110, 120, 132) nämlich einerseits einer zweiten (110) und einer dritten Hilfslinie (120), die in Ausgangsstellung der Faltenbalgluftfeder (1, 101) jeweils senkrecht zur Hauptachse (132) der Faltenbalgluftfeder (1, 101) und in axialer Richtung gesehen mittig durch die jeweiligen äußeren Balgfalten verläuft,
- mit einer vierten fiktiven Hilfslinie (12, 132), die parallel zur Hauptachse (13, 13) der Faltenbalgluftfeder (1, 101) durch die Drehachse (6, 106) der Faltenbalgluftfeder (1, 101) verläuft.

## Claims

1. Convoluted bellows air spring (1, 101) having at least one belt ring (2, 112, 122), wherein the convoluted bellows air spring (1, 101) is tiltable about a pivot axis (6, 106),
**characterized in that** the belt ring (2, 112, 122), or if there are a number of belt rings (2, 112, 122) the belt rings (2, 112, 122), is or are respectively articulated by means of a lever (7, 117, 127), wherein the articulating pivot axis (10,110,120) of the respective lever (7, 117, 127) differs from the pivot axis (6, 106) of the convoluted bellows air spring (1, 101), and
- in a convoluted bellows air spring (1, 101) having two folds and a belt ring (2, 112, 122), the intersection of two fictitious auxiliary lines (11, 12) namely defines a first auxiliary line (11) which, in the starting position of the convoluted bellows air spring (1, 101), is perpendicular to the main axis (13) of the convoluted bellows air spring (1, 101) and, as seen in the axial direction, runs centrally through an adjacent convoluted bellows fold,
- in a convoluted bellows air spring (1, 101) having three folds and two belt rings (2, 112, 122), the intersections of three fictitious auxiliary lines (110, 120, 132) namely defines a second auxiliary line (110) and a third auxiliary line (120) which, in the starting position of the convoluted bellows air spring (1, 101), are each perpendicular to the main axis (132) of the convoluted bellows air spring (1, 101) and, as viewed in the axial direction, run centrally through the respective outer convoluted bellows folds,
- with a fourth fictitious auxiliary line (12, 132) which runs parallel to the main axis (13, 13) of the convoluted bellows air spring (1, 101) through the pivot axis (6, 106) of the convoluted bellows air spring (1, 101).

## Revendications

1. Ressort pneumatique à soufflet (1, 101) avec au moins un anneau de ceinture (2, 112, 122), le ressort pneumatique à soufflet (1, 101) étant apte à être incliné autour d'un axe de pivotement (6, 106),
**caractérisé en ce que** l'anneau de ceinture (2, 112, 122) ou, dans le cas de plusieurs anneaux de ceinture (2, 112, 122), les anneaux de ceinture (2, 112, 122), est ou sont chacun articulé(s) au moyen d'un levier (7, 117, 127), l'axe de pivotement (10, 110, 120) du levier respectif (7, 117, 127) s'écartant de l'axe de pivotement (6, 106) du ressort pneumatique à soufflet (1, 101), et
- dans le cas d'un ressort pneumatique à soufflet (1, 101) avec deux plis et un anneau de ceinture (2, 112, 122), étant défini par le point d'intersection de deux lignes auxiliaires fictives (11, 12), à savoir d'une part une première ligne auxiliaire (11) qui, dans la position initiale du ressort pneumatique à soufflet (1, 101), s'étend perpendiculairement à l'axe principal (13) du ressort pneumatique à soufflet (1, 101) et, vu dans la direction axiale, au milieu d'un pli de soufflet adjacent,
- dans le cas d'un ressort pneumatique à soufflet (1, 101) avec trois plis et deux anneaux de ceinture (2, 112, 122), étant défini par les points d'intersection de trois lignes auxiliaires fictives (110, 120, 132), à savoir d'une part une deuxième ligne auxiliaire (110) et une troisième ligne auxiliaire (120) qui, dans la position initiale du ressort pneumatique à soufflet (1, 101), s'étendent chacune perpendiculairement à l'axe principal (132) du ressort pneumatique à soufflet (1, 101) et, vu dans la direction axiale, au milieu des plis de soufflet extérieurs respectifs,
- avec une quatrième ligne auxiliaire fictive (12, 132) qui s'étend parallèlement à l'axe principal (13, 13) du ressort pneumatique à soufflet (1, 101) en passant par l'axe de pivotement (6, 106) du ressort pneumatique à soufflet (1, 101).
